# EUROPÄISCHE PATENTSCHRIFT

(11) **EP 3 142 296 B1**
(45) Veröffentlichungstag und Bekanntmachung des Hinweises auf die Patenterteilung: **18.04.2018**
(21) Anmeldenummer: 15185045.0
(22) Anmeldetag: 14.09.2015
(51) Int. Cl.: H04L 12/24, H04L 12/751

(54) **VERFAHREN ZUR KONFIGURATION EINES MODULAREN STEUERUNGSGERÄTS EINES INDUSTRIELLEN AUTOMATISIERUNGSSYSTEMS UND MODULARES STEUERUNGSGERÄT**
METHOD FOR CONFIGURING A MODULAR CONTROL DEVICE OF AN INDUSTRIAL AUTOMATION SYSTEM AND MODULAR CONTROL DEVICE
PROCEDE DE CONFIGURATION D'UN APPAREIL DE COMMANDE MODULAIRE D'UN SYSTEME D'AUTOMATISATION INDUSTRIEL ET APPAREIL DE COMMANDE MODULAIRE

(43) Veröffentlichungstag der Anmeldung: 15.03.2017
(73) Patentinhaber: Siemens Aktiengesellschaft, 80333 München (DE)
(72) Erfinder: Albrecht, Harald, 90475 Nürnberg (DE); Plonka, Reiner, 90768 Fürth (DE); Stutz, Hartmut, 76199 Karlsruhe (DE)

(56) Entgegenhaltungen:
- EP-A1- 2 913 727
- US-A1- 2003 236 870
- "Modicon M580 The World First ePAC", , 29. Januar 2014 (2014-01-29), XP055250496, Gefunden im Internet: URL:http://www.eic-automation.com/content/ download/2588/15762/file/1.Modicon M580 - Presentation.pdf [gefunden am 2016-02-16]

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus EP 1 188 293 B1 ist ein Schnittstellenmodul für eine speicherprogrammierbare Steuerung bekannt, das eine Übermittlung von Datenanforderungen durch ein Kommunikationsgerät oder eine Rechnereinheit außerhalb eines industriellen Automatisierungssystems an die speicherprogrammierbare Steuerung ermöglicht, beispielsweise per Internet. Das Schnittstellenmodul umfasst einen Prozessor mit einem Echtzeitbetriebssystem, eine Kommunikationsnetzschnittstelle und einen Rückwandbus-Treiber für ein Rückwandbus-System der speicherprogrammierbaren Steuerung. Darüber hinaus sind im Schnittstellenmodul ein doppelter Protokollstapel, der einen ersten und einen zweiten Protokollstapel umfasst, sowie ein Client-Steuerungsprozess implementiert. Der Client-Steuerungsprozess dient dazu, um mit dem doppelten Protokollstapel sowie dem Rückwandbus-Treiber zu kommunizieren und Datenanforderungen zu initiieren. Zusätzlich ist ein Server-Steuerungsprozess vorgesehen, um mit dem doppelten Protokollstapel sowie dem Rückwandbus-Treiber zu kommunizieren und auf Datenanforderungen zu antworten. Darüber hinaus dient ein Protokoll-Steuerungsprozess dazu, um mit dem doppelten Protokollstapel sowie dem Rückwandbus-Treiber zu kommunizieren und an den Protokollstapel gerichtete Anforderungen abzurufen sowie zu beantworten. Während der erste Protokollstapel für zeitunkritische Nachrichten vorgesehen ist, werden zeitkritische Nachrichten durch den zweiten Protokollstapel behandelt.

In US 2004/0114591 A1 ist eine speicherprogrammierbare Steuerung beschrieben, die ein Rückwandbus-System sowie mit dem Rückwandbus-System verbundene Modul umfasst, die mittels Internet-Kommunikationsprotokoll (IP) über das Rückwandbus-System kommunizieren. Dabei weist jedes Modul eine eigene IP-Adresse auf.

EP2913727A1 betrifft ein modulares industrielles Automatisierungsgerät mit einem Rückwandbus-System, mehreren an das Rückwandbus-System angeschlossenen Funktionsmodulen, die jeweils einen Kommunikationsnetzadapter, eine Funktionseinheit zur Implementierung eines Kommunikationsprotokollstapels und ein mit dem Kommunikationsnetzadapter verknüpftes Brückenelement umfassen. Außerdem ist ein an das Rückwandbus-System angeschlossenes Router-Modul vorgesehen, das einen Kommunikationsnetzadapter, eine mit dem Kommunikationsnetzadapter verknüpfte Funktionseinheit zur Implementierung eines Router-Kommunikationsprotokollstapels und für jedes Funktionsmodul jeweils ein Verknüpfungselement umfasst. Ein solches Verknüpfungselement verknüpft das die Funktionseinheit zur Implementierung des Router-Kommunikationsprotokollstapels über das Rückwandbus-System mit dem Brückenelement des jeweiligen Funktionsmoduls. Nur der Kommunikationsprotokollstapel des Router-Moduls umfasst Routing-Funktionen. US2003/236870 beschreibt ein Verfahren zum Auswahl eines "designated" Router in einem Overlay-Netzwerk, wobei der designierte Router die Netzwerktopologie zu anderen Routern sammelt und verteilt. Die Auswahl wird durch den Vergleich der Prioritäten der verschiedenen Computer durchgeführt. Der vorliegenden Erfindung liegt die Aufgabe zugrunde, ein Verfahren zu schaffen, das eine aufwandsarme Konfiguration eines mit mehreren unterschiedlichen Teilnetzen verbindbaren modularen Steuerungsgeräts ermöglicht, sowie ein geeignetes Steuerungsgeräts anzugeben.

Diese Aufgabe wird erfindungsgemäß durch ein Verfahren mit den in Anspruch 1 angegebenen Merkmalen und durch ein modulares Steuerungsgerät mit den in Anspruch 13 angegebenen Merkmalen gelöst. Vorteilhafte Weiterbildungen der vorliegenden Erfindung sind in den abhängigen Ansprüchen angegeben.

Das erfindungsgemäße Verfahren ist zur Konfiguration eines modularen Steuerungsgeräts vorgesehen, das eine Zentraleinheit zur Verarbeitung von Steuerungsprogrammen und zumindest ein Kommunikationsmodul umfasst, die jeweils einen integrierten Router umfassen und über ein Rückwandbus-System miteinander verbunden sind. Dabei weisen erste Router eine erweiterte Router-Funktion für eine Verbindung mit einem übergeordneten Kommunikationsnetz auf, während zweite Router eine eingeschränkte Router-Funktion für eine Verbindung mit einem untergeordneten Feldebenen-Teilnetz aufweisen. Eine Datenübermittlung über das Rückwandbus-System erfolgt vorzugsweise entsprechend Internet Protocol.

Erfindungsgemäß erfassen Router-Konfigurationseinheiten der ersten Router jeweils über Router-Konfigurationseinheiten anderer Router verfügbare Router-Funktionen und zugeordnete Prioritätswerte der jeweiligen Router. Außerdem überprüfen die Router-Konfigurationseinheiten der ersten Router jeweils anhand der erfassten Router-Funktionen anderer Router, ob weitere erste Router vorhanden sind. Darüber hinaus überprüfen die Router-Konfigurationseinheiten der ersten Router bei vorhandenen weiteren ersten Routern jeweils anhand der Prioritätswerte, welchem ersten Router der höchste Prioritätswert zugeordnet ist. Der erste Router mit dem höchsten Prioritätswert wird als übergeordneter Router für eine Verbindung mit einem übergeordneten Kommunikationsnetz konfiguriert. Alle übrigen Router werden jeweils als untergeordnete Router für eine Verbindung mit einem untergeordneten Feldebenen-Teilnetz konfiguriert und übernehmen eine durch den übergeordneten Router vorgegebene Namensdienst- und Teilnetz-Adresskonfiguration. Auf diese Weise kann auch ohne vorherige Projektierung eine automatische Verbindung eines modularen Steuerungsgeräts mit einer Vielzahl untergeordneter Feldebenen-Teilnetze sowie mit einem übergeordneten Kommunikationsnetz sichergestellt werden.

Entsprechend einer vorteilhaften Weiterbildung des erfindungsgemäßen Verfahrens wird der Router der Zentraleinheit als übergeordneter Router konfiguriert wird, falls keine ersten Router vorhanden sind. In diesem Fall kann der Router der Zentraleinheit beispielsweise eine mittels eines Projektierungssystems vorgegebene Namensdienst- und Teilnetz-Adresskonfiguration übernehmen, so dass stets eine definierte Konfiguration sichergestellt ist.

Darüber hinaus kann der übergeordnete Router entsprechend einer anderen vorteilhaften Ausgestaltung der vorliegenden Erfindung mittels seiner Router-Konfigurationseinheit eine Namensdienst- und Teilnetz-Adresskonfiguration aus dem übergeordneten Kommunikationsnetz übernehmt. Vorzugsweise übernehmen die untergeordneten Router mittels ihrer jeweiligen Router-Konfigurationseinheit die Namensdienst- und Teilnetz-Adresskonfiguration des übergeordneten Routers. Somit ist eine zueinander konsistente Konfiguration sämtlicher integrierter Router des modularen Steuerungsgeräts gewährleistet.

Entsprechend einer bevorzugten Ausgestaltung des erfindungsgemäßen Verfahrens werden Konfigurationen verbleibender Router bei ersatzlosem Entfernen eines Kommunikationsmoduls während laufenden Betriebs unverändert beibehalten. Vorteilhafterweise überprüft die der Zentraleinheit zugeordnete Router-Konfigurationseinheit während laufenden Betriebs nur bzw. erst bei Hinzufügen eines Kommunikationsmoduls, welcher Router als übergeordneter Router zu konfigurieren ist. Dementsprechend veranlasst die der Zentraleinheit zugeordnete Router-Konfigurationseinheit nur bei einer Änderung des übergeordneten Routers eine Umkonfiguration von Routern, deren Konfiguration jeweils von der Änderung des übergeordneten Routers abhängig ist. Auf diese Weise kann die Konfiguration des modularen Steuerungsgeräts bei laufendem Betrieb so stabil wie möglich gehalten werden. Insbesondere führt ein noch nicht vollständig abgeschlossener Austausch von Kommunikationsmodulen auf diese Weise nicht zu einer inkonsistenten oder instabilen Systemkonfiguration. In diesem Sinn kann darüber hinaus vorgesehen sein, dass die der Zentraleinheit zugeordnete Router-Konfigurationseinheit während eines Steuerungsprogrammablaufs gegen Konfigurationsänderungen gesperrt wird. In diesem Fall ist die der Zentraleinheit zugeordnete Router-Konfigurationseinheit während eines Steuerungsprogrammablaufs vorzugsweise auch bei Hinzufügen eines Kommunikationsmoduls gegen Konfigurationsänderungen gesperrt.

Die Router-Konfigurationseinheiten der ersten Router überprüfen entsprechend einer weiteren Ausgestaltung der vorliegenden Erfindung bei vorhandenen weiteren ersten Routern, ob in der Zentraleinheit eine Projektierung eines übergeordneten Router gespeichert ist, die gegenüber den Prioritätswerten der jeweiligen ersten Router vorrangig ist. Vorteilhafterweise wird der erste Router entsprechend der in der Zentraleinheit gespeicherten Projektierung bei einem positiven Überprüfungsergebnis als übergeordneter Router konfiguriert. Somit kann eine gewünschte Router-Topologie auch durch eine projektierte Konfiguration vorgegeben werden.

Das erfindungsgemäße modulare Steuerungsgerät ist zur Durchführung eines Verfahrens entsprechend vorangehenden Ausführungen vorgesehen und umfasst eine Zentraleinheit zur Verarbeitung von Steuerungsprogrammen und zumindest ein Kommunikationsmodul, die jeweils einen integrierten Router umfassen und über ein Rückwandbus-System miteinander verbunden sind. Dabei weisen erste Router eine erweiterte Router-Funktion für eine Verbindung mit einem übergeordneten Kommunikationsnetz auf, während zweite Router eine eingeschränkte Router-Funktion für eine Verbindung mit einem untergeordneten Feldebenen-Teilnetz aufweisen. Router-Konfigurationseinheiten der ersten Router sind dazu ausgestaltet und eingerichtet, jeweils über Router-Konfigurationseinheiten anderer Router verfügbare Router-Funktionen und zugeordnete Prioritätswerte der jeweiligen Router zu erfassen. Außerdem sind die Router-Konfigurationseinheiten der ersten Router dazu ausgestaltet und eingerichtet, jeweils anhand der erfassten Router-Funktionen anderer Router zu überprüfen, ob weitere erste Router vorhanden sind.

Erfindungsgemäß sind die Router-Konfigurationseinheiten der ersten Router dazu ausgestaltet und eingerichtet, bei vorhandenen weiteren ersten Routern jeweils anhand der Prioritätswerte zu überprüfen, welchem ersten Router der höchste Prioritätswert zugeordnet ist. Darüber hinaus sind die Router dazu ausgestaltet und eingerichtet, dass der erste Router mit dem höchsten Prioritätswert als übergeordneter Router für eine Verbindung mit einem übergeordneten Kommunikationsnetz konfiguriert wird. Zusätzlich sind die Router dazu ausgestaltet und eingerichtet, dass alle übrigen Router jeweils als untergeordnete Router für eine Verbindung mit einem untergeordneten Feldebenen-Teilnetz konfiguriert werden und eine durch den übergeordneten Router vorgegebene Namensdienst- und Teilnetz-Adresskonfiguration übernehmen.

Die vorliegende Erfindung wird nachfolgend an einem Ausführungsbeispiel anhand der Zeichnung näher erläutert. Es zeigt die
- Figur 1: eine schematische Darstellung eine modularen Steuerungsgeräts eines industriellen Automatisierungssystems mit mehreren an ein Rückwandbus-System angeschlossenen Kommunikationsmodulen und integrierten Routern,
- Figur 2: das modulare Steuerungsgerät gemäß Figur 1, dessen integrierten Routern jeweils eine Router-Manager bzw. Router-Topologie-Manager-Komponente zugeordnet ist.

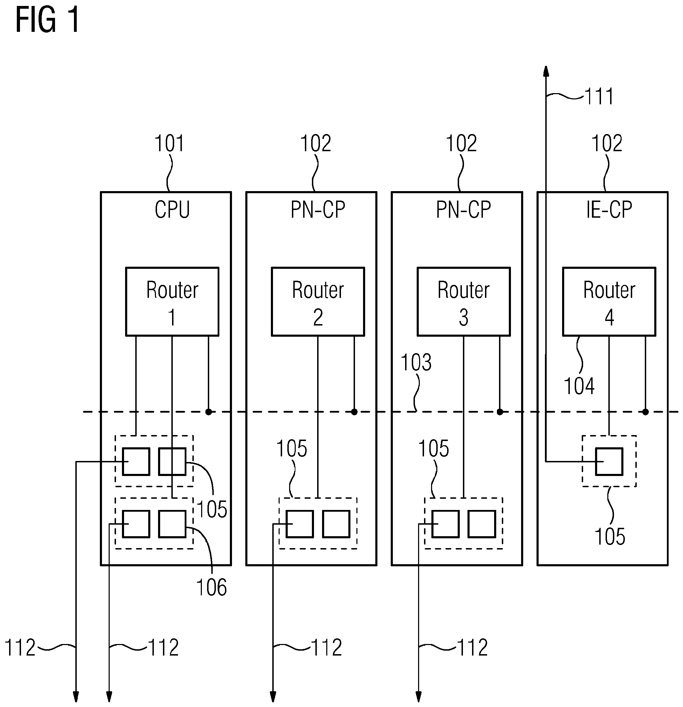

Das in Figur 1 dargestellte modulare Steuerungsgerät weist eine Steuerungszentraleinheit 101 und mehrere Kommunikationsprozessoren 102 auf, die über einen IPv6-basierten Rückwandbus 103 miteinander verbunden sind. Das modulare Steuerungsgerät ist im vorliegenden Ausführungsbeispiel eine speicherprogrammierbare Steuerung.

Sowohl die Steuerungszentraleinheit 101 als die Kommunikationsprozessoren 102 umfassen jeweils zumindest eine Ethernet-105 bzw. Feldbus-Schnittstelle 106 zur Uplink-Anbindung des modularen Steuerungsgeräts an ein Anlagennetz 111 bzw. zur Downlink-Anbindung an Feldbus-Subnetze 112. Die Ethernet-Schnittstellen 105 können außer zur Uplink-Anbindung auch zur Downlink-Anbindung an PROFINET-basierte Feldbus-Subnetze verwendet werden. Darüber hinaus umfassen die Steuerungszentraleinheit 101 und die Kommunikationsprozessoren 102 jeweils einen integrierten Router 104, der insbesondere einen IP-Kommunikationsprotokollstapel implementiert und über Schnittstellen-Treiber als Hardwareabstraktionselementen auf Ethernet-105 bzw. Feldbus-Schnittstellen 106 zugreift.

Bei bisherigen modularen Steuerungsgeräten muss vor Inbetriebnahme projektiert werden, welche Schnittstelle zur Uplink-Anbindung vorgesehen ist und welche Schnittstellen zur Downlink-Anbindung verwendet werden. Da der Rückwandbus 103 des modularen Steuerungsgeräts einen Aufbau eines eigenständiger IPv6-Links mit Multicast-Eigenschaften ermöglicht und durch IPv6-Stacks als Ethernet-Link behandelt werden kann, können verfügbare Funktionen auch am Rückwandbus 103 verwendet werden. Hierzu zählt insbesondere ein selbständiges dezentrales Erzeugen von IPv6-Adressen.

Um die in die Steuerungszentraleinheit 101 und in die Kommunikationsprozessoren 102 integrierten Router 104 innerhalb einer Hierarchie zu organisieren, wird jedem Router 104 entweder eine Rolle als Uplink-Router oder eine Rolle als Downlink-Router zugewiesen. Üblicherweise ist pro modularem Steuerungsgerät nur ein Router als Uplink-Router vorgesehen. In Sonderfällen können mehrere Router gleichzeitig die Rolle als Uplink-Router übernehmen. Dabei gelten einschlägige Regeln für Multi-Homed-Netze mit automatischer Anbindung.

Der Uplink-Router stellt für den Rückwandbus 103 einen Default Router für die Downlink-Router dar. Dabei wird eine Schnittstelle des Uplink-Routers als Uplink-Schnittstelle festgelegt. Alle übrigen Schnittstellen des Uplink-Routers werden als Downlink-Schnittstellen behandelt. Die Downlink-Router benutzen den Uplink-Router als ihren Default Router. Mit Ausnahme interner Schnittstellen der Downlink-Router zum Rückwandbus 103 werden sämtliche Schnittstellen der Downlink-Router als Downlink-Schnittstellen behandelt. Ein IPv6-Router übernimmt über die Uplink-Schnittstelle Subnetz-Präfixe sowie seine DNS-Konfiguration, also DNS-Server-Adressen und DNS-Suchliste. Die Subnetz-Präfixe können beispielsweise im Rahmen einer hierarchischen oder einer zentralisierten Präfix-Delegation übernommen werden. Die DNS-Konfiguration der Router wird über die jeweiligen Downlink-Schnittstellen unterlagerte Subnetze, insbesondere PROFINET-basierte Feldbus-Subnetze, weitergegeben.

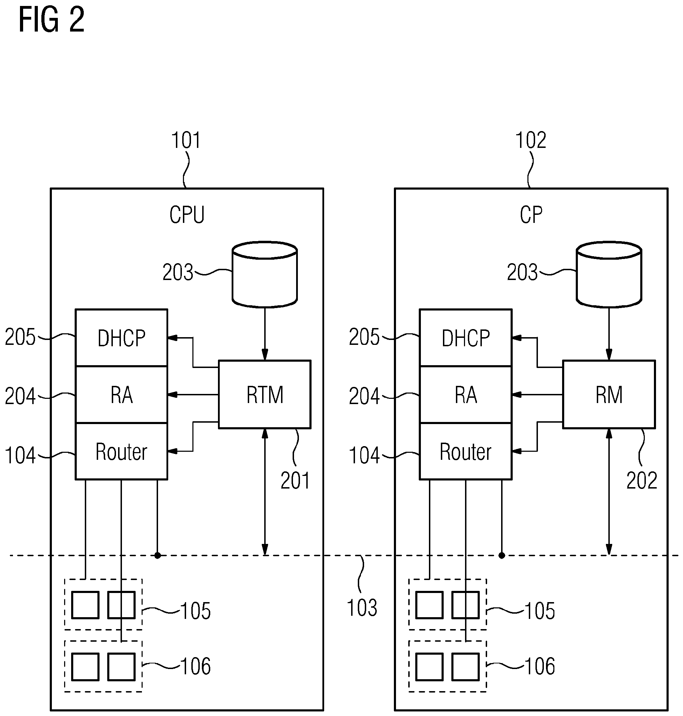

Um eine topologische Verknüpfung der integrierten Router 104 innerhalb des modularen Steuerungsgeräts festzulegen, umfasst die Steuerungszentraleinheit 101 entsprechend Figur 2 eine Router-Topologie-Manager-Komponente 201. Analog dazu weisen die Kommunikationsprozessoren 103 jeweils eine korrespondierende Router-Manager-Komponente 202 auf. Die Router-Topologie-Manager-Komponente 201 ist für eine Koordination der topologischen Verknüpfung der integrierten Router 104 innerhalb des modularen Steuerungsgeräts vorgesehen. Über den Rückwandbus 103 fragt die Router-Topologie-Manager-Komponente 201 mittels der jeweiligen Router-Manager-Komponente 202 pro Kommunikationsprozessor 102 für die Koordination relevante Informationen ab, insbesondere grundsätzlich mögliche Router-Rollen. Die Informationen über mögliche Router-Rollen werden zusammen mit einem dem jeweiligen Router 104 zugeordneten Prioritätswert jeweils in einer Datenbank 203 gespeichert, die der Router-Topologie-Manager-Komponente 201 bzw. der jeweiligen Router-Manager-Komponente 202 zugeordnet ist. Im vorliegenden Ausführungsbeispiel gelten für in der jeweiligen Datenbank 203 gespeicherte Informationen nachstehende allgemeine Festlegungen.
1. Für eine Steuerungszentraleinheit mit Uplink-Fähigkeit werden in der jeweiligen Datenbank 203 "Uplink möglich" als Rollen-Attribut und der Prioritätswert 0 gespeichert.
2. Für einen PROFINET-Kommunikationsprozessor zur Anbindung von Feldbus-Subnetzen werden in der jeweiligen Datenbank 203 "nur Downlink" als Rollen- Attribut und der Prioritätswert 0 gespeichert.
3. Für einen Ethernet-Kommunikationsprozessor zur Anbindung an ein Anlagennetz werden in der jeweiligen Datenbank 203 "Uplink möglich" als Rollen- Attribut und der Prioritätswert 10 zugeordnet.

Die Router-Topologie-Manager-Komponente 201 führt auf Grundlage der abgefragten Informationen eine Bewertung durch, um für die Router 104 der Steuerungszentraleinheit 101 und der Kommunikationsprozessoren 102 konkrete Router-Rollen festzulegen. Diese festgelegten Router-Rollen werden dann zur Konfiguration der integrierten Router 104 verwendet, insbesondere hinsichtlich Router-Funktionskomponenten wie RA-Relay 204 (Router Advertisement) und DHCPv6-Relay 205 (Dynamic Host Configuration Protocol). Im vorliegenden Ausführungsbeispiel gelten bei der Bewertung der abgefragten Informationen durch die Router-Topologie-Manager-Komponente 201 nachstehende allgemeine Grundsätze.
1. Für einen Router mit Rollen-Attribut "nur Downlink" wird immer eine Rolle als Downlink-Router konfiguriert. Die Bewertung ist damit abgeschlossen.
2. Bei mehreren Routern mit Rollen-Attribut "Uplink möglich" wird der Router mit dem höchsten Prioritätswert als Uplink-Router konfiguriert;
3. alle übrigen Router mit Rollen-Attribut "Uplink möglich" werden als Downlink-Router konfiguriert.

Nach Abschluss der Bewertung übermittelt die Router-Topologie-Manager-Komponente 201 der Steuerungszentraleinheit 101 über den Rückwandbus 103 Informationen an die Router-Manager-Komponenten 202 der Kommunikationsprozessoren 102, welche Router-Rolle jeweils zu konfigurieren ist. Die Router-Manager-Komponenten 202 konfigurieren ihre zugeordneten Router 104 dann dementsprechend. In analoger Weise gilt dies auch für die durch die Router-Topologie-Manager-Komponente 201 konfigurierte Router-Rolle des in die Steuerungszentraleinheit 101 integrierten Routers 104.

Werden Kommunikationsprozessoren während laufenden Betriebs ausgetauscht (hot plugging), ist sicherzustellen, dass sich konfigurierte Router-Rollen nicht selbständig bzw. unkoordiniert ändern. Stattdessen sind topologische Verknüpfungen der integrierten Router 104 innerhalb des modularen Steuerungsgeräts bis auf weiteres beizubehalten. Daher wird an die Router-Topologie-Manager-Komponente 201 der Steuerungszentraleinheit 101 bei einem Hinzufügen eines Kommunikationsprozessors lediglich eine entsprechende Ereignismeldung übermittelt. Erst auf diese Ereignismeldung führt die Router-Topologie-Manager-Komponente 201 führt eine Neubewertung festzulegender Router-Rollen durch. Nur falls sich aufgrund dieser Neubewertung eine Router-Rolle ändert, veranlasst die Router-Topologie-Manager-Komponente 201 eine Rekonfiguration des jeweiligen Routers 104. Insbesondere werden Konfigurationsinformationen bei einem Entfernen von Kommunikationsprozessoren 102 aus dem modularen Steuerungsgerät nicht unmittelbar verworfen, sondern zunächst beibehalten. Auf diese Weise wird verhindert, dass bei überlappenden Entfernen-Hinzufügen-Vorgängen noch nicht ersetzte Kommunikationsprozessoren aus obiger Bewertung fallen.

Darüber hinaus kann die Router-Topologie-Manager-Komponente 201 der Steuerungszentraleinheit 101 verriegelt werden, sobald ein Steuerungsprogramm im modularen Steuerungsgerät abläuft, um einen Programmablauf auf Grundlage stabiler topologischer Verknüpfungen der integrierten Router 104 innerhalb des modularen Steuerungsgeräts sicherzustellen. In diesem Sinn unterbleibt auch bei Hinzufügen-Ereignissen eine Neubewertung festzulegender Router-Rollen.

Grundsätzlich kann eine gewünschte Router-Topologie durch eine mittels eines Projektierungs- bzw. Engineeringsystems erstellte Gesamtkonfiguration vorgegeben werden. Dabei werden Router-Rollen mittels eines Engineeringsystems während einer Planungsphase projektiert und in der Datenbank 203 der Steuerungszentraleinheit 101 als Gesamtkonfiguration gespeichert. Die projektierten Router-Rollen werden dann durch die Router-Topologie-Manager-Komponente 201 der Steuerungszentraleinheit 101 über den Rückwandbus 103 an die Router-Manager-Komponenten 203 der Kommunikationsprozessoren 102 zur weiteren Verarbeitung übermittelt.

## Patentansprüche

1. Verfahren zur Konfiguration eines modularen Steuerungsgeräts eines industriellen Automatisierungssystems, bei dem
- das Steuerungsgerät eine Zentraleinheit (101) zur Verarbeitung von Steuerungsprogrammen und zumindest ein Kommunikationsmodul (102) umfasst, die jeweils einen integrierten Router (104) umfassen und über ein Rückwandbus-System (103) miteinander verbunden sind,
- jedem integrierten Router (104) entweder eine Rolle als erster Router oder eine Rolle als zweiter Router zugewiesen wird, wobei erste Router als Uplink-Router eine erweiterte Router-Funktion für eine Verbindung mit einem übergeordneten Kommunikationsnetz (111) und zweite Router als Downlink-Router eine eingeschränkte Router-Funktion für eine Verbindung mit einem untergeordneten Feldebenen-Teilnetz (112) aufweisen,
**dadurch gekennzeichnet, dass**
- Router-Konfigurationseinheiten (201) der ersten Router jeweils über Router-Konfigurationseinheiten (202) anderer Router verfügbare Router-Funktionen und zugeordnete Prioritätswerte der jeweiligen Router erfassen,
- die Router-Konfigurationseinheiten (201) der ersten Router jeweils anhand der erfassten Router-Funktionen anderer Router überprüfen, ob weitere erste Router vorhanden sind,
- die Router-Konfigurationseinheiten (201) der ersten Router bei vorhandenen weiteren ersten Routern jeweils anhand der Prioritätswerte überprüfen, welchem ersten Router der höchste Prioritätswert zugeordnet ist,
- der erste Router mit dem höchsten Prioritätswert als übergeordneter Router für eine Verbindung mit einem übergeordneten Kommunikationsnetz (111) konfiguriert wird,
- alle übrigen Router jeweils als untergeordnete Router für eine Verbindung mit einem untergeordneten Feldebenen-Teilnetz (112) konfiguriert werden und eine durch den übergeordneten Router vorgegebene Namensdienst- und Teilnetz-Adresskonfiguration übernehmen.

2. Verfahren nach Anspruch 1,
bei dem der Router (104) der Zentraleinheit (101) als übergeordneter Router konfiguriert wird, falls keine ersten Router vorhanden sind.

3. Verfahren nach Anspruch 2,
bei dem der Router (104) der Zentraleinheit (101) eine mittels eines Projektierungssystems vorgegebene Namensdienst- und Teilnetz-Adresskonfiguration übernimmt.

4. Verfahren nach Anspruch 1,
bei dem der übergeordnete Router mittels seiner Router-Konfigurationseinheit (201) eine Namensdienst- und Teilnetz-Adresskonfiguration aus dem übergeordneten Kommunikationsnetz (111) übernimmt.

5. Verfahren nach einem der Ansprüche 1 bis 4,
bei dem die untergeordneten Router mittels ihrer jeweiligen Router-Konfigurationseinheit (202) die Namensdienst- und Teilnetz-Adresskonfiguration des übergeordneten Routers übernehmen.

6. Verfahren nach einem der Ansprüche 1 bis 5,
bei dem Konfigurationen verbleibender Router bei ersatzlosem Entfernen eines Kommunikationsmoduls (102) während laufenden Betriebs unverändert beibehalten werden.

7. Verfahren nach Anspruch 6,
bei dem die der Zentraleinheit (101) zugeordnete Router-Konfigurationseinheit (201) während laufenden Betriebs nur bei Hinzufügen eines Kommunikationsmoduls (102) überprüft, welcher Router als übergeordneter Router zu konfigurieren ist, und bei dem die der Zentraleinheit (101) zugeordnete Router-Konfigurationseinheit (201) nur bei einer Änderung des übergeordneten Routers eine Umkonfiguration eines Routers veranlasst, dessen Konfiguration von der Änderung des übergeordneten Routers abhängig ist.

8. Verfahren nach einem der Ansprüche 1 bis 7,
bei dem die der Zentraleinheit (101) zugeordnete Router-Konfigurationseinheit (201) während eines Steuerungsprogrammablaufs gegen Konfigurationsänderungen gesperrt wird.

9. Verfahren nach Anspruch 8,
bei dem die der Zentraleinheit (101) zugeordnete Router-Konfigurationseinheit (201) während eines Steuerungsprogrammablaufs auch bei Hinzufügen eines Kommunikationsmoduls gegen Konfigurationsänderungen gesperrt ist.

10. Verfahren nach einem der Ansprüche 1 bis 9,
bei dem die Router-Konfigurationseinheiten (201) der ersten Router bei vorhandenen weiteren ersten Routern überprüfen, ob in der Zentraleinheit (101) eine Projektierung eines übergeordneten Router gespeichert ist, die gegenüber den Prioritätswerten der jeweiligen ersten Router vorrangig ist.

11. Verfahren nach Anspruch 10,
bei dem der erste Router entsprechend der in der Zentraleinheit (101) gespeicherten Projektierung bei einem positiven Überprüfungsergebnis als übergeordneter Router konfiguriert wird.

12. Verfahren nach einem der Ansprüche 1 bis 11,
bei dem eine Datenübermittlung über das Rückwandbus-System (103) entsprechend Internet Protocol erfolgt.

13. Modulares Steuerungsgerät eines industriellen Automatisierungssystems zur Durchführung eines Verfahrens nach einem der Ansprüche 1 bis 12, bei dem
- das Steuerungsgerät eine Zentraleinheit (101) zur Verarbeitung von Steuerungsprogrammen und zumindest ein Kommunikationsmodul (102) umfasst, die jeweils einen integrierten Router (104) umfassen und über ein Rückwandbus-System (103) miteinander verbunden sind,
- jedem integrierten Router (104) entweder eine Rolle als erster Router oder eine Rolle als zweiter Router zugewiesen ist, wobei erste Router als Uplink-Router eine erweiterte Router-Funktion für eine Verbindung mit einem übergeordneten Kommunikationsnetz (111) und zweite Router als Downlink-Router eine eingeschränkte Router-Funktion für eine Verbindung mit einem untergeordneten Feldebenen-Teilnetz (112) aufweisen,
- Router-Konfigurationseinheiten (201) der ersten Router dazu ausgestaltet und eingerichtet sind, jeweils über Router-Konfigurationseinheiten (202) anderer Router verfügbare Router-Funktionen und zugeordnete Prioritätswerte der jeweiligen Router zu erfassen,
- die Router-Konfigurationseinheiten (201) der ersten Router dazu ausgestaltet und eingerichtet sind, jeweils anhand der erfassten Router-Funktionen anderer Router zu überprüfen, ob weitere erste Router vorhanden sind,
- die Router-Konfigurationseinheiten (201) der ersten Router dazu ausgestaltet und eingerichtet sind, bei vorhandenen weiteren ersten Routern jeweils anhand der Prioritätswerte zu überprüfen, welchem ersten Router der höchste Prioritätswert zugeordnet ist,
- die Router dazu ausgestaltet und eingerichtet sind, dass
- der erste Router mit dem höchsten Prioritätswert als übergeordneter Router für eine Verbindung mit einem übergeordneten Kommunikationsnetz (111) konfiguriert wird, und dass
- alle übrigen Router jeweils als untergeordnete Router für eine Verbindung mit einem untergeordneten Feldebenen-Teilnetz (112)konfiguriert werden und eine durch den übergeordneten Router vorgegebene Namensdienst- und Teilnetz-Adresskonfiguration übernehmen.

## Claims

1. Method for configuring a modular control device of an industrial automation system, in which
- the control device comprises a central processing unit (101) for processing control programs and at least one communication module (102) which each comprise an integrated router (104) and are connected to one another via a backplane bus system (103),
- each integrated router (104) is allocated either a role as a first router or a role as a second router, first routers, as uplink routers, having an extended router function for a connection to a superordinate communication network (111), and second routers, as downlink routers, having a restricted router function for a connection to a subordinate field level subnetwork (112),
**characterized in that**
- router configuration units (201) of the first routers each use router configuration units (202) of other routers to capture available router functions and assigned priority values of the respective routers,
- the router configuration units (201) of the first routers each use the captured router functions of other routers to check whether further first routers are available,
- if further first routers are available, the router configuration units (201) of the first routers each use the priority values to check which first router is assigned the highest priority value,
- the first router with the highest priority value is configured as the superordinate router for a connection to a superordinate communication network (111),
- all other routers are each configured as subordinate routers for a connection to a subordinate field level subnetwork (112) and assume a name service and subnetwork address configuration predefined by the superordinate router.

2. Method according to Claim 1,
in which the router (104) of the central processing unit (101) is configured as a superordinate router if no first routers are available.

3. Method according to Claim 2,
in which the router (104) of the central processing unit (101) assumes a name service and subnetwork address configuration predefined by means of a project planning system.

4. Method according to Claim 1,
in which the subordinate router assumes a name service and subnetwork address configuration from the superordinate communication network (111) by means of its router configuration unit (201).

5. Method according to one of Claims 1 to 4,
in which the subordinate routers assume the name service and subnetwork address configuration of the superordinate router by means of their respective router configuration unit (202).

6. Method according to one of Claims 1 to 5,
in which configurations of remaining routers are retained without change if a communication module (102) is removed without substitution during ongoing operation.

7. Method according to Claim 6,
in which the router configuration unit (201) assigned to the central processing unit (101) checks which router should be configured as a superordinate router during ongoing operation only if a communication module (102) is added, and in which, only if the superordinate router is changed, the router configuration unit (201) assigned to the central processing unit (101) causes a reconfiguration of a router whose configuration depends on the change of the superordinate router.

8. Method according to one of Claims 1 to 7,
in which the router configuration unit (201) assigned to the central processing unit (101) is blocked against configuration changes during control program execution.

9. Method according to Claim 8,
in which the router configuration unit (201) assigned to the central processing unit (101) is also blocked against configuration changes if a communication module is added during control program execution.

10. Method according to one of Claims 1 to 9,
in which, if further first routers are available, the router configuration units (201) of the first routers check whether a project plan of a superordinate router, which has priority over the priority values of the respective first routers, is stored in the central processing unit (101).

11. Method according to Claim 10,
in which the first router is configured as a superordinate router according to the project plan stored in the central processing unit (101) in the event of a positive checking result.

12. Method according to one of Claims 1 to 11,
in which data are transmitted according to the Internet Protocol via the backplane bus system (103).

13. Modular control device of an industrial automation system for carrying out a method according to one of Claims 1 to 12, in which
- the control device comprises a central processing unit (101) for processing control programs and at least one communication module (102) which each comprise an integrated router (104) and are connected to one another via a backplane bus system (103),
- each integrated router (104) is allocated either a role as a first router or a role as a second router, first routers, as uplink routers, having an extended router function for a connection to a superordinate communication network (111), and second routers, as downlink routers, having a restricted router function for a connection to a subordinate field level subnetwork (112),
- router configuration units (201) of the first routers are configured and set up to each use router configuration units (202) of other routers to capture available router functions and assigned priority values of the respective routers,
- the router configuration units (201) of the first routers are configured and set up to each use the captured router functions of other routers to check whether further first routers are available,
- if further first routers are available, the router configuration units (201) of the first routers are configured and set up to each use the priority values to check which first router is assigned the highest priority value,
- the routers are configured and set up such that
- the first router with the highest priority value is configured as the superordinate router for a connection to a superordinate communication network (111), and
- all other routers are each configured as subordinate routers for a connection to a subordinate field level subnetwork (112) and assume a name service and subnetwork address configuration predefined by the superordinate router.

## Revendications

1. Procédé de configuration d'un appareil de commande modulaire d'un système d'automatisation industriel, dans lequel
- l'appareil de commande comprend une unité (101) centrale de traitement de programmes de commande et au moins un module (102) de communication, qui comprennent chacun un routeur (104 ) intégré et qui sont reliés entre eux par un système (103) de bus de paroi arrière,
- on affecte à chaque routeur (104) intégré soit un rôle de premier routeur, soit un rôle de deuxième routeur, des premiers routeurs ayant, comme routeur uplink, une fonction de routeur étendue pour une liaison avec un réseau (111) de communication supérieur hiérarchiquement et des deuxièmes routeurs ayant, comme routeur downlink, une fonction de routeur limité pour une liaison avec un sous-réseau (112) de plan sur site subordonné,
**caractérisé en ce que**
- des unités (201) de configuration de routeur des premiers routeurs détectent respectivement des fonctions de routeur, disponibles par des unités (202) de configuration de routeur d'autres routeurs et des valeurs de priorité associées des routeurs respectifs,
- les unités (201) de configuration de routeur des premiers routeurs contrôlent respectivement, à l'aide des fonctions de routeur détectées d'autres routeurs s'il y a d'autres premiers routeurs,
- les unités (201) de configuration de routeur des premiers routeurs contrôlent, en présence d'autres premiers routeurs, respectivement à l'aide des valeurs de priorité, le premier routeur auquel est associée la valeur de priorité la plus grande,
- le premier routeur, ayant la valeur de priorité la plus grande, est configuré comme routeur supérieur hiérarchiquement pour une liaison avec un réseau (111) de communication supérieur hiérarchiquement,
- tous les autres routeurs sont configurés respectivement en routeurs subordonnés pour une liaison avec un sous-réseau (111) de plan sur site subordonné et prennent en charge une configuration d'adresse de service de dénomination et de sous-réseau donnée à l'avance par le routeur supérieur hiérarchiquement.

2. Procédé suivant la revendication 1,
dans lequel on configure le routeur (104) de l'unité (101) centrale en routeur supérieur hiérarchiquement s'il n'y a pas de premier routeur.

3. Procédé suivant la revendication 2,
dans lequel le routeur (104) de l'unité (101) centrale prend en charge une configuration d'adresse de service de dénomination et de sous-réseau donnée à l'avance au moyen d'un système d'établissement de projet.

4. Procédé suivant la revendication 1,
dans lequel le routeur supérieur hiérarchiquement prend en charge, au moyen de son unité (201) de configuration de routeur, une configuration d'adresse de service de dénomination et de sous-réseau dans le réseau (111) de communication supérieur hiérarchiquement.

5. Procédé suivant l'une des revendications 1 à 4,
dans lequel les routeurs subordonnés prennent en charge, au moyen de leur unité (202) de configuration de routeur respective, la configuration d'adresse du service de dénomination et du sous-réseau du routeur supérieur hiérarchiquement.

6. Procédé suivant l'une des revendications 1 à 5,
dans lequel on conserve inchangé, au cours du fonctionnement, des configurations de routeurs restants, si un module (102) de communication est éloigné sans remplacement.

7. Procédé suivant la revendication 6,
dans lequel l'unité (201) de configuration de routeur, associée à l'unité (101) centrale, contrôle, au cours du fonctionnement, seulement s'il y a addition d'un module (102) de communication, quel routeur doit être configuré en routeur supérieur hiérarchiquement, et dans lequel l'unité (201) de configuration, associée à l'unité (101) centrale, ne provoque, que s'il y a une modification du routeur supérieur hiérarchiquement, un nouvelle configuration d'un routeur, dont la configuration dépend de la modification du routeur supérieur hiérarchiquement.

8. Procédé suivant l'une des revendications 1 à 7,
dans lequel l'unité (201) de configuration de routeur, associée à l'unité (101) centrale, est bloquée vis-à-vis de modifications de configuration pendant un déroulement du programme de commande.

9. Procédé suivant la revendication 8,
dans lequel l'unité (201) de configuration de routeur, associée à l'unité (101) centrale, est, pendant un déroulement du programme de commande, bloquée vis-à-vis de modifications de configuration, même si un module de communication est ajouté.

10. Procédé suivant l'une des revendications 1 à 9,
dans lequel les unités (201) de configuration de routeur des premiers routeurs contrôlent, en présence d'autres premiers routeurs, s'il est mémorisé, dans l'unité (101) centrale, un établissement de projet d'un routeur supérieur hiérarchiquement, qui l'emporte par rapport aux valeurs de priorité des premiers routeurs respectifs.

11. Procédé suivant la revendication 10,
dans lequel le premier routeur est configuré comme routeur supérieur hiérarchiquement si le résultat du contrôle est positif, conformément à l'établissement de projet mémorisé dans l'unité (101) centrale.

12. Procédé suivant l'une des revendication 1 à 11,
dans lequel une transmission de données s'effectue conformément au protocole Internet par le système (103) à bus de paroi arrière.

13. Appareil de commande modulaire d'un système d'automatisation industriel pour effectuer un procédé suivant l'une des revendications 1 à 12, dans lequel
- l'appareil de commande comprend une unité (101) centrale de traitement de programmes de commande et au moins un module (102) de communication, qui comprennent chacun un routeur (104) intégré et qui sont reliés entre eux par un système (103) de bus de paroi arrière,
- on affecte à chaque routeur (104) intégré soit un rôle de premier routeur, soit un rôle de deuxième routeur, des premiers routeurs ayant, comme routeur uplink, une fonction de routeur étendue pour une liaison avec un réseau (111) de communication supérieur hiérarchiquement et des deuxièmes routeurs ayant, comme routeur downlink, une fonction de routeur limité pour une liaison avec un sous-réseau (112) de plan sur site subordonné,
- des unités (201) de configuration de routeur des premiers routeurs sont conformées et conçues pour détecter chacune des fonctions de routeur disponibles par des unités (202) de configuration d'autres routeurs et des valeurs de priorité associées des routeurs respectifs,
- les unités (201) de configuration de routeur des premiers routeurs sont conformées et conçues pour contrôler, chacune à l'aide des fonctions de routeur détectées d'autres routeurs, s'il y a d'autres premiers routeurs,
- les unités (201) de configuration de routeur des premiers routeurs sont conformées et conçues pour, en présence d'autres premiers routeurs, contrôler respectivement, au moyen des valeurs de priorité à quel premier routeur est associée la valeur de priorité la plus grande,
- les routeurs sont conformés et conçus de manière
- à ce que le premier routeur, ayant la valeur de priorité la plus grande, soit configuré comme routeur supérieur hiérarchiquement pour une liaison avec un réseau (111) de communication supérieur hiérarchiquement et de manière
- à ce que tous les autres routeurs soient configurés chacun comme routeur subordonné pour une liaison avec un sous-réseau (112) de plan de site subordonné et à prendre en charge une configuration d'adresse de service de dénomination et de sous-réseau donnée à l'avance par le routeur supérieur hiérarchiquement.
